# EUROPÄISCHE PATENTSCHRIFT

(11) **EP 3 443 234 B1**
(45) Veröffentlichungstag und Bekanntmachung des Hinweises auf die Patenterteilung: **29.04.2020**
(21) Anmeldenummer: 17710167.2
(22) Anmeldetag: 07.03.2017
(51) Int. Cl.: F16B 12/26

(54) **BESCHLAG ZUM LÖSBAREN VERBINDEN ZWEIER MÖBELTEILE**
FITTING FOR RELEASABLY CONNECTING TWO FURNITURE PARTS
FERRURE POUR LA LIAISON LIBÉRABLE DE DEUX ÉLÉMENTS DE MEUBLE

(30) Priorität: 11.04.2016 DE 202016101880 U
(43) Veröffentlichungstag der Anmeldung: 20.02.2019
(73) Patentinhaber: Häfele Berlin GmbH & Co KG, 12307 Berlin (DE)
(72) Erfinder: WALZ, Rüdiger, 72149 Neustetten (DE); LEISTERT, Peer, 15566 Schöneiche (DE); NITSCHMANN, Gunter, 72285 Pfalzgrafenweiler (DE)
(74) Vertreter: Kohler Schmid Möbus Patentanwälte
(86) Internationale Anmeldenummer: PCT/EP2017/055271
(87) Internationale Veröffentlichungsnummer: WO 2017/178152

(56) Entgegenhaltungen:
- EP-A2- 0 681 109
- EP-A2- 1 530 926
- WO-A1-98/22721
- US-A- 5 013 073

## Beschreibung

Die Erfindung betrifft einen Beschlag zum lösbaren Verbinden zweier Möbelteile, bestehend aus einem ersten, an einem ersten Möbelteil befestigbaren Beschlagteil und einem zweiten, an einem zweiten Möbelteil befestigbaren Beschlagteil, wobei am zweiten Beschlagteil mindestens ein starrer Rastnocken angeordnet ist, der im ineinandergesteckten Zustand der Beschlagteile von einer Rastnase hintergriffen ist, welche an einer auslenkbaren Rastzunge des ersten Beschlagteils angebracht ist, wobei die Rastzunge aus ihrer den Rastnocken hintergreifenden Verriegelungsstellung heraus in eine den Rastnocken nicht mehr hintergreifende Lösestellung bewegbar und in dieser Lösestellung am zweiten Beschlagteil fixierbar ist und diese Fixierung durch Trennen der Beschlagteile aufhebbar ist, und wobei die Rastzunge ihrerseits mindestens eine Rastfeder aufweist. Die Erfindung betrifft auch eine Anordnung mit zwei Möbelteilen, die durch solch einen Beschlag miteinander verbunden sind.

Ein derartiger zweiteiliger Beschlag ist beispielsweise durch die WO 98/22721 A1 bekannt geworden, in der eine lösbare Verbindung zwischen zwei Gehäuseteilen beschrieben ist.

Ein zweiteiliger Beschlag zum lösbaren Verbinden zweier Möbelteile ist aus der EP 0 681 109 A2 bekannt, die in Fig. 7 ein zweites Beschlagteil mit zwei angeformten, starren Arretierungsnocken zeigt. Hinter diesen Arretierungsnocken kann die federnde Rastzunge des ersten Beschlagteils in ihrer Lösestellung arretiert werden, und beim Trennen der beiden Beschlagteile wird dann die federnde Rastzunge, sobald sie keinerlei Kontakt mehr mit den Arretierungsnocken aufweist, wieder in ihre verbindungsbereite Grundstellung zurückschnappen. Ein erneutes Zusammenfügen der beiden Beschlagteile wird dann wiederum ein Hintergreifen der Rastnocken durch die entsprechenden Rastnasen der federnden Rastzunge des ersten Beschlagteils bewirken. Statt zweier Arretierungsnocken kann auch nur ein Arretierungsnocken in mittiger Anordnung vorgesehen sein. Bei diesem bekannten Beschlag muss die federnde Rastzunge elastisch soweit verformbar ausgeführt sein, dass sie an den Arretierungsnocken vorbei in ihre Lösestellung bewegt werden kann.

Demgegenüber ist es die Aufgabe der vorliegenden Erfindung, bei einem Beschlag der eingangs genannten Art alternative Fixierungen der Rastzunge in der Lösestellung anzugeben.

Diese Aufgabe wird erfindungsgemäß durch einen Beschlag mit den Merkmalen von Anspruch 1 gelöst.

Erfindungsgemäß ist beim Ineinanderstecken der beiden Beschlagteile spätestens in der Verriegelungsstellung der Rastzunge die mindestens eine Rastfeder an dem Gegenlager quer zur Auslenkebene der Rastzunge ausgelenkt und dadurch vorgespannt. In der Lösestellung der Rastzunge schnappt die Rastfeder dann zurück und hintergreift das Gegenlager, wodurch die ausgelenkte Rastzunge am Trägerteil verrastet ist. Beim Ineinanderstecken werden die Topfflügel durch das eingesteckte Trägerteil nach außen aufgespreizt und dadurch in einer Bohrungswand verankert.

Vorzugsweise weist die Rastzunge zu beiden Seiten jeweils eine solche Rastfeder auf, deren freies Federende beim Ineinanderstecken der Beschlagteile durch ein Gegenlager des zweiten Beschlagteils quer zur Auslenkebene der Rastzunge auslenkbar ist.

Zum Auslenken der Rastfeder aus der Verriegelungs- in die Lösestellung muss die Rastzunge vom zweiten Beschlagteil her zugänglich sein. Vorzugsweise weist daher das zweite Beschlagteil einen Auflageboden mit einer Zugangsöffnung auf, durch die hindurch ein Werkzeug zum Auslenken der Rastzunge einführbar ist. Bei dieser Zugangsöffnung kann es sich um ein rundes Loch oder eine Schlitz- oder Kreuzschlitzöffnung handeln. Wenn sich bei ineinandergesteckten Beschlagteilen die Rastzunge bis in die Zugangsöffnung hinein erstreckt oder sogar daraus hervorsteht, kann die Rastzunge auch mit einem Finger in die Lösestellung ausgelenkt werden.

Die Erfindung betrifft auch eine Anordnung aufweisend ein erstes Möbelteil mit einer unterseitigen, randoffenen Bohrung, ein zweites Möbelteil mit einer Bohrung und einen wie oben ausgebildeten Beschlag, wobei das erste Beschlagteil in die Bohrung des ersten Möbelteils und das zweite Beschlagteil in die Bohrung des zweiten Möbelteils eingesetzt sind und wobei die beiden Beschlagteile im ineinandergesteckten Zustand durch die Rastzunge miteinander verriegelt sind. Vorzugsweise sind die beiden Möbelteile aus Holz oder aus einem Holzfaserstoff gebildet.

Weitere Vorteile der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine erste Ausführungsform des erfindungsgemäßen Beschlags mit seinen zwei Beschlagteilen;
- Fign. 2a-2c: das an einem ersten Möbelteil befestigte, erste Beschlagteil (Fig. 2a), das an einem zweiten Möbelteil befestigte zweite Beschlagteil (Fig. 2b) und die beiden mittels der beiden Beschlagteile aneinander befestigten Möbelteile;
- Fign. 3a-3c: das Ineinanderstecken der beiden Beschlagteile bis in eine verriegelte Steckendstellung;
- Fign. 4a-4c: die Entriegelung der beiden Beschlagteile mittels eines Werkzeugs;
- Fign. 5a-5c: Detailansichten der beiden Beschlagteile gemäß Va-Va in Fig. 3b, Vb-Vb in Fig. 3c und Vc-Vc in Fig. 4b;
- Fig. 6: eine zweite Ausführungsform des erfindungsgemäßen Beschlags, bei dem die Entriegelung der beiden Beschlagteile mittels eines anderen Werkzeugs erfolgt;
- Fig. 7: eine Ausführungsform eines nicht erfindungsgemäßen Beschlags in der verriegelten Steckendstellung; und
- Fign. 8a, 8b: die Entriegelung der beiden Beschlagteile des in Fig. 7 gezeigten Beschlags in seiner Schnittansicht gemäß VIII-VIII in Fig. 7.

In der folgenden Figurenbeschreibung werden für gleiche bzw. funktionsgleiche Bauteile identische Bezugszeichen verwendet.

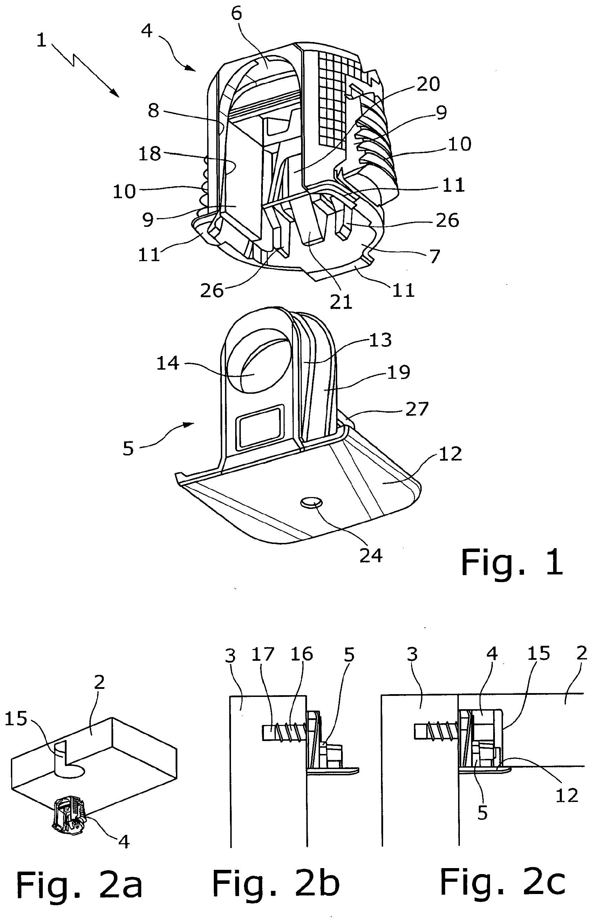

Der in **Fig. 1** gezeigte Beschlag **1** dient zum lösbaren Verbinden zweier Möbelteile **2, 3** (Fig. 2) und besteht aus einem ersten, am ersten Möbelteil 2 befestigbaren Beschlagteil **4** und einem zweiten, am zweiten Möbelteil 3 befestigbaren Beschlagteil **5.** Im gezeigten Ausführungsbeispiel dient der Beschlag 1 als Tablarverbinder zum Befestigen eines Tablars 2 an einer Korpuswand 3. Das Tablar 2 und die Korpuswand 3 sind beispielsweise Holzfaserplatten.

Das erste Beschlagteil ist als einstückiger Einbohrtopf 4 mit einem Topfboden **6,** mit einer stirnseitigen Topföffnung **7** und mit einem in der Umfangswand vorgesehenen Längsschlitz **8** ausgebildet, der zur Topföffnung 7 hin offen ist und sich bis zum Topfboden 6 erstreckt. Zu beiden Seiten des Längsschlitzes 8 sind in der Umfangswand zwei Topfflügel **9** freigeschnitten, die nur an ihrer dem Topfboden 6 zugewandten Seite mit der Umfangswand verbunden sind und nach außen über die Umfangswand hinaus ausgestellt sind. An den Topfflügeln 9 ist außenseitig eine Verrippung in Form von mehreren axial hintereinander angeordneten Umfangsrippen **10** angeformt. Weiterhin sind an der Topföffnung 7 mehrere radial nach außen vorstehende Randabschnitte **11** zur Tiefenbegrenzung vorgesehen. Der Einbohrtopf 4 ist beispielsweise aus Kunststoff.

Das zweite Beschlagteil ist als einstückiges Trägerteil 5 ausgebildet, das einen Auflageboden **12** und einen über den Auflageboden 12 hochstehenden Befestigungsschenkel **13** mit einem Loch **14** aufweist. Das Trägerteil 5 ist beispielsweise aus Zinkdruckguss.

Wie in **Fig. 2a** gezeigt, wird der Einbohrtopf 4 von Hand bis zur Tiefenbegrenzung in eine unterseitige, randoffene Bohrung **15** des Tablars 2 eingedrückt. Durch die ausgestellten Topfflügel 9 hält der Einbohrtopf 4 nach dem Eindrücken selbstständig, aber ein verdreht in die Bohrung 15 eingesetzter Einbohrtopf 4 kann von Hand noch ausgerichtet werden.

Wie in **Fig. 2b** gezeigt, wird das Trägerteil 5 an der Korpuswand 3 mittels einer Schraube **16** befestigt, die das Loch 14 durchgreift und in eine Bohrung **17** der Korpuswand 3 geschraubt ist. Alternativ zur gezeigten Schraubversion kann das Trägerteil 5 an der Korpuswand 3 auch mittels eines separaten Steckstiftes, der das Loch 14 durchgreift und in die Bohrung 17 eingesteckt ist, oder mittels eines anstelle des Schraubenlochs 14 am Trägerteil 5 angeformten Steckstiftes, der in die Bohrung 17 eingesteckt ist, befestigt werden. Optional kann der angeformte Steckstift an seiner Oberseite Keilnasen aufweisen.

Wie in **Fig. 2c** gezeigt, wird das Tablar 2 mit seinem Einbohrtopf 4 von oben auf das an der Korpuswand 3 befestigte Trägerteil 5 eingehängt, wobei der Einbohrtopf 4 mit seinem Längsschlitz 8 auf den Befestigungsschenkel 13 des Trägerteils 5 aufgesteckt wird. Schräge Führungsflächen **18, 19** am Einbohrtopf 4 und am Befestigungsschenkel 13 bewirken beim Einhängen, dass der Einbohrtopf 4 in Richtung auf die Korpuswand 3 gezogen wird und dadurch das Tablar 2 spaltfrei an der Korpuswand 3 anliegt. Die in Fig. 2c gezeigte Steckendposition ist erreicht, wenn der Einbohrtopf 4 auf dem Auflageboden 12 aufsitzt. In dieser Steckendposition ist einerseits, wie unten noch näher beschrieben wird, der Einbohrtopf 4 entgegen seiner Steckrichtung am Trägerteil 5 verriegelt (verclipst). Andererseits sind die beiden Topfflügel 9 des Einbohrtopfs 4 durch den Befestigungsschenkel 13 nach außen aufgespreizt und dadurch die Umfangsrippen 10 in die Wandung der Bohrung 15, also in den Holzwerkstoff des Tablars 2, eingedrückt, so dass der Einbohrtopf 4 in der Bohrung 15 fest verankert ist.

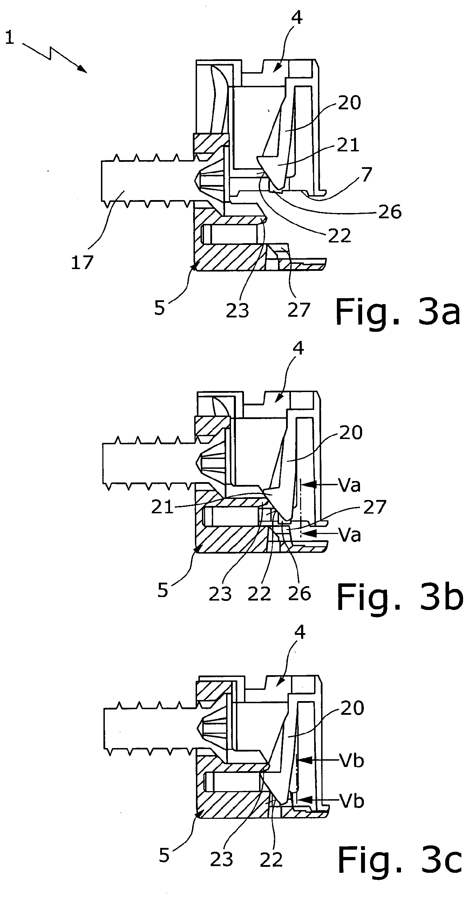

In **Fign. 3a-3c** ist die Verriegelung des Einbohrtopfes 4 am Trägerteil 5 im Detail gezeigt. Im Einbohrtopf 4 ist eine auslenkbare Rastzunge **20** angebracht, die an ihrem zur Topföffnung 7 hin gerichteten, freien Ende eine Rastnase **21** mit Auflaufschräge **22** aufweist. Am Trägerteil 5 ist ein starrer Rastnocken **23** angeordnet, der mit der Rastnase 21 zusammenwirkt. Beim Ineinanderstecken von Einbohrtopf 4 und Trägerteil 5 wird die Rastzunge 20 aus ihrer Grundstellung (Fig. 3a) durch die Auflaufschräge 22 der Rastnase 21 an dem Rastnocken 23 ausgelenkt und dadurch vorgespannt (Fig. 3b), bis in der Steckendposition die Rastnase 21 am Rastnocken 23 vorgeschoben ist und die Rastzunge 20 mit ihrer Rastnase 21 hinter den Rastnocken 23 zurückschnappt (Fig. 3c). Durch die den Rastnocken 23 hintergreifende Rastzunge 20 ist der Einbohrtopf 4 entgegen seiner Steckrichtung am Trägerteil 5 verriegelt, so dass das Tablar 2 nicht mehr von der Korpuswand 3 gelöst werden kann.

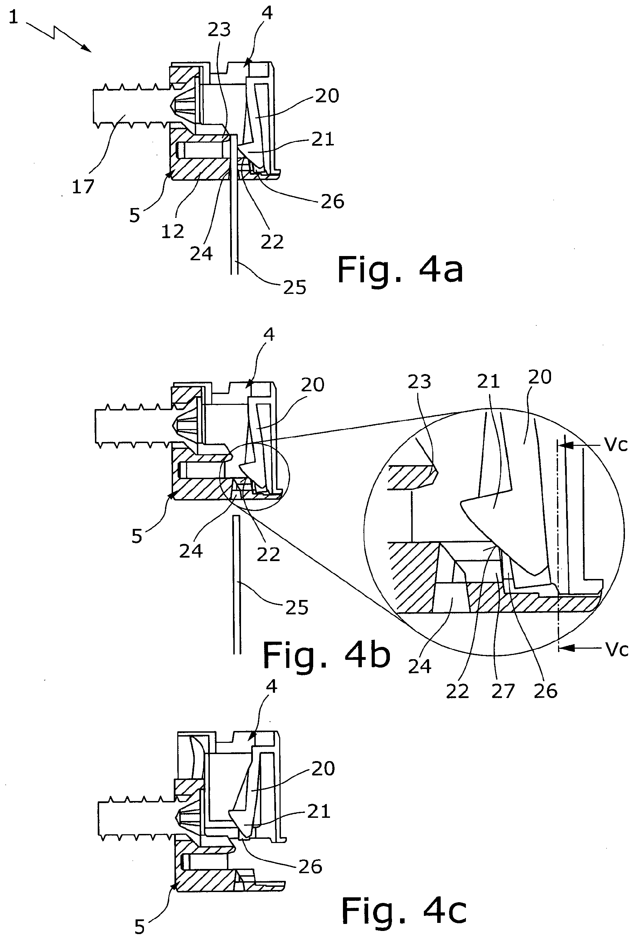

Zum Lösen der Verriegelung wird wie in **Fign. 4a-4c** gezeigt vorgegangen. Durch eine kleine runde Zugangsöffnung **24** im Auflageboden 12 wird ein Werkzeug in Form eines dünnen Pins **25** (Durchmesser ca. 1,2mm) hochgeschoben, der gegen die Auflaufschräge 22 der Rastnase 21 läuft und dadurch die Rastzunge 20 aus der Verriegelungsstellung (Fig. 3c) in eine in den Rastnocken 23 nicht mehr hintergreifende Lösestellung auslenkt (Fig. 4a). In dieser Lösestellung bleibt die Rastzunge 20, auch nach Entfernen des Pins 25, solange fixiert (Fig. 4b), bis die Rastzunge 20 beim Trennen der beiden Beschlagteile 4, 5 wieder in ihre verbindungsbereite Grundstellung (Fign. 3a, 4c) zurückkehrt.

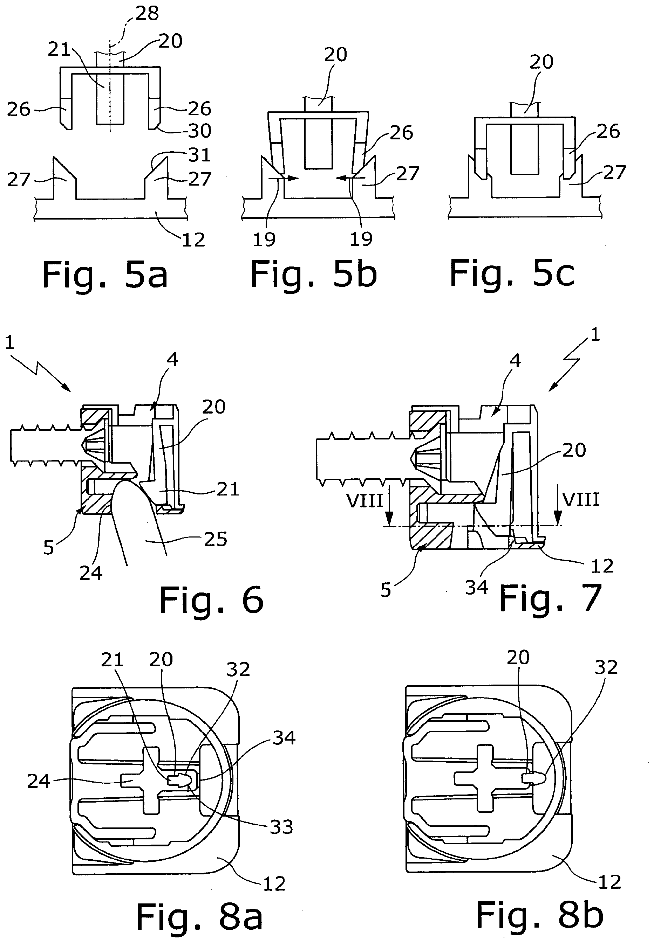

Zum Fixieren in der Lösestellung weist die Rastzunge 20, wie in Fig. 1 und im Detail in **Fig. 5a** gezeigt ist, zu beiden Seiten ihrer Rastnase 21 jeweils eine Rastfeder **26** und das Trägerteil 5 zwei über den Auflageboden 12 hochstehende Gegenlager **27** auf. Beim Ineinanderstecken der beiden Beschlagteile 4, 5 sind spätestens in der Verriegelungsstellung der Rastzunge 20 die Rastfedern 26 an den Gegenlagern 27 quer zur Auslenkebene **28** der Rastzunge 20 jeweils in Richtung **29** hin zur Rastnase 21, also in Richtung aufeinander zu, ausgelenkt und dadurch in entgegengesetzter Richtung vorgespannt (**Fig. 5b**)**.** Die beim Ineinanderstecken der Beschlagteile 4, 5 aufeinandertreffenden Stirnseiten **30, 31** der Rastfedern 26 und der Gegenlager 27 verlaufen entsprechend schräg zur Steckrichtung, um die Rastfedern 26 in Richtung aufeinander auszulenken. Die Gegenlager 27 erstrecken sich von der Verriegelungsstellung bis vor die Lösestellung der Rastzunge 20, sodass die Rastfedern 26 an den Gegenlagern 27 ausgelenkt und vorgespannt bleiben. In der Lösestellung der Rastzunge 20 schnappen die Rastfedern 26 dann zurück, also in Richtung voneinander fort, und hintergreifen die Gegenlager 27 (**Fig. 5c**), wodurch in der Lösestellung die ausgelenkte Rastzunge 20 am Trägerteil 5 verrastet und vorgespannt ist (Fig. 4b). In dieser Lösestellung bleibt die Rastzunge 20 solange fixiert, bis sie beim Trennen der beiden Beschlagteile 4, 5 keinerlei Kontakt mehr mit den Gegenlagern 27 hat und wieder in ihre verbindungsbereite Grundstellung (Fign. 3a, 4c) zurückschnappt.
Statt der gezeigten zwei seitlichen Rastfedern 26 kann alternativ auch nur eine einzige Rastfeder vorhanden sein.
Im Unterschied zum Beschlag der Fig. 1 ist bei dem in **Fig. 6** gezeigte Beschlag 1 die Zugangsöffnung 24 im Auflageboden 12 als Schlitz- oder Kreuzschlitzöffnung ausgebildet ist, um mithilfe der darin eingesteckten Spitze eines Schraubendrehers 25 die Rastzunge 20 aus der Verriegelungs- in die gezeigte Lösestellung auszulenken.

Vom Beschlag der Fig. 1 unterscheidet sich der in **Fig. 7** gezeigte nicht erfindungsgemäße Beschlag 1 lediglich durch eine andere Fixierung der Rastzunge 20 in der Lösestellung. Wie in **Fign. 8a, 8b** gezeigt, ist das äußerste Ende der Rastzunge 20 in dem der Rastnase 21 abgewandten hinteren Bereich als ein Rastkopf **32** mit zwei sich nach hinten verjüngenden Außenseiten **33** ausgebildet. Das Trägerteil 5 weist in seinem Auflageboden 12 einen nach oben offenen Schlitz **34** auf. Während der Rastkopf 32 in der in Fig. 8a gezeigten Verriegelungsstellung der Rastzunge 20 vom Schlitz 34 beabstandet ist, ist er in der in Fig. 8b gezeigten Lösestellung der Rastzunge 20 durch den Schlitz 34 bis zur Verrastung hinter der Schlitzwand des Trägerteils 5 hindurchgedrückt, wodurch die ausgelenkte Rastzunge 20 am Trägerteil 5 verrastet und vorgespannt ist. In dieser Lösestellung bleibt die Rastzunge 20 solange fixiert, bis der Rastkopf 32 beim Trennen der beiden Beschlagteile 4, 5 aus dem Schlitz 34 nach oben ausgetreten ist und die Rastzunge 20 wieder in ihre verbindungsbereite Grundstellung zurückschnappt.
Statt wie gezeigt am äußersten Ende der Rastzunge 20 kann der Rastkopf 32 hinteren Bereich der Rastfeder auch an anderer Stelle vorhanden sein; insbesondere kann auch die gesamte Rückseite der Rastfeder 20 einen sich nach hinten verjüngenden Rastquerschnitt aufweisen.

Bei einer nicht gezeigten Ausführungsform die Zugangsöffnung 24 im Auflageboden 12 des Trägerteils 5 so groß ausgeführt, dass im ineinandergesteckten Zustand der Beschlagteile 4, 5 die Rastzunge 20 mit dem Finger von der Verriegelungs- in die Lösestellung ausgelenkt werden kann. Zu diesem Zweck kann die Rastzunge 20 bis in die Zugangsöffnung 24 hinein verlängert sein oder aus der Zugangsöffnung 24 herausstehen.

## Patentansprüche

1. Beschlag (1) zum lösbaren Verbinden zweier Möbelteile (2, 3), bestehend aus einem ersten, an einem ersten Möbelteil (2) befestigbaren Beschlagteil (4) und einem zweiten, an einem zweiten Möbelteil (3) befestigbaren Beschlagteil (5), wobei am zweiten Beschlagteil (4) mindestens ein starrer Rastnocken (23) angeordnet ist, der im ineinandergesteckten Zustand der Beschlagteile (4, 5) von einer Rastnase (21) hintergriffen ist, welche an einer auslenkbaren Rastzunge (20) des ersten Beschlagteils (4) angebracht ist, wobei die Rastzunge (20) aus ihrer den Rastnocken (23) hintergreifenden Verriegelungsstellung heraus in eine den Rastnocken (23) nicht mehr hintergreifende Lösestellung bewegbar und in dieser Lösestellung am zweiten Beschlagteil (5) fixierbar ist und diese Fixierung durch Trennen der Beschlagteile (4, 5) aufhebbar ist, und wobei die Rastzunge (20) ihrerseits mindestens eine Rastfeder (26) aufweist,
**dadurch gekennzeichnet,**
**dass** das erste Beschlagteil als ein Einbohrtopf (4), insbesondere mit abspreizbaren Topfflügeln (9), und das zweite Beschlagteil als ein Trägerteil (5) mit einem Befestigungsschenkel (13) ausgebildet ist, der einen angeformten Steckzapfen oder ein Loch (14) für eine Schraube (16) oder einen Zapfen aufweist, und dass das freie Federende der Rastfeder (26) beim Ineinanderstecken der Beschlagteile (4, 5) durch ein Gegenlager (27) des zweiten Beschlagteils (5) quer zur Auslenkebene (28) der Rastzunge (20) auslenkbar ist, wobei das freie Federende von der Verriegelungsstellung bis vor die Lösestellung der Rastzunge (20) durch das Gegenlager (27) ausgelenkt bleibt und in der Lösestellung der Rastzunge (20) hinter das Gegenlager (27) zurückgeschnappt und dadurch am zweiten Beschlagteil (5) fixiert ist.

2. Beschlag nach Anspruch 1, **dadurch gekennzeichnet, dass** die Rastzunge (20) zu beiden Seiten jeweils eine Rastfeder (26) aufweist, deren freies Federende beim Ineinanderstecken der Beschlagteile (4, 5) durch ein Gegenlager (27) des zweiten Beschlagteils (5) quer zur Auslenkebene (28) der Rastzunge (20) auslenkbar ist, wobei das freie Federende von der Verriegelungsstellung bis vor die Lösestellung der Rastzunge (20) durch das Gegenlager (27) ausgelenkt bleibt und in der Lösestellung der Rastzunge (20) hinter das Gegenlager (27) zurückgeschnappt und dadurch am zweiten Beschlagteil (5) fixiert ist.

3. Beschlag nach Anspruch 2, **dadurch gekennzeichnet, dass** die freien Federenden der beiden Rastfedern (26) beim Ineinanderstecken der Beschlagteile (4, 5) durch die Gegenlager (27) des zweiten Beschlagteils (5) in Richtung (29) aufeinander zu auslenkbar sind.

4. Beschlag nach einem der vorhergehenden Ansprüche, **dadurch gekennzeichnet, dass** mindestens eine der beim Ineinanderstecken der Beschlagteile (4, 5) aufeinandertreffenden Stirnseiten (30, 31) des freien Federendes und des Gegenlagers (27), vorzugsweise beide aufeinandertreffende Stirnseiten (30, 31), zum Auslenken des freien Federendes schräg zur Steckrichtung der Beschlagteile (4, 5) ausgebildet sind.

5. Beschlag nach einem der vorhergehenden Ansprüche, **dadurch gekennzeichnet, dass** das zweite Beschlagteil (5) einen Auflageboden (12) mit einer Zugangsöffnung (24) aufweist, durch die hindurch ein Werkzeug (25) zum Auslenken der Rastzunge (20) aus der Verriegelungsstellung in die Lösestellung einführbar ist.

6. Beschlag nach Anspruch 5, **dadurch gekennzeichnet, dass** die Zugangsöffnung (24) als rundes Loch oder als Schlitz- oder Kreuzschlitzöffnung ausgebildet ist.

7. Beschlag nach Anspruch 5 oder 6, **dadurch gekennzeichnet, dass** sich im ineinandergesteckten Zustand der Beschlagteile (4, 5) die Rastzunge (20) mindestens bis in die Zugangsöffnung (24) des zweiten Beschlagteils (5) hinein erstreckt.

8. Anordnung aufweisend ein erstes Möbelteil (2), insbesondere Tablar, mit einer unterseitigen, randoffenen Bohrung (15), ein zweites Möbelteil (3), insbesondere Korpuswand, mit einer Bohrung (17) und einen Beschlag (1) nach einem der vorhergehenden Ansprüche, wobei das erste Beschlagteil (4) in die Bohrung (15) des ersten Möbelteils (3) und das zweite Beschlagteil (5) in die Bohrung (17) des zweiten Möbelteils (3) eingesetzt sind und wobei die beiden Beschlagteile (4, 5) im ineinandergesteckten Zustand durch die Rastzunge (20) miteinander verriegelt sind.

## Claims

1. A fitting (1) for releasably connecting two furniture parts (2, 3), comprising a first fitting part (4), which can be fastened on a first furniture part (2), and a second fitting part (5), which can be fastened on a second furniture part (3), wherein the second fitting part (4) has at least one rigid latching cam (23) which, when the fitting parts (4, 5) are plugged into each other, is engaged behind by a latching nose (21), said latching nose being provided on a deflectable latching tongue (20) of the first fitting part (4), wherein the latching tongue (20) can be moved from its locking position, in which it engages behind the latching cam (23), into a release position, in which it no longer engages behind the latching cam (23), and, in said release position, can be fixed to the second fitting part (5), and this fixing can be disengaged by separating the fitting parts (4, 5), and wherein the latching tongue (20), for its part, has at least one latching spring (26),
**characterized in that**
the first fitting part is designed in the form of a drill-in cup (4), in particular with spreadable cup wings (9), and that the second fitting part is designed in the form of a carrier part (5) with a fastening leg (13), which has a pin formed on it or has a hole (14) for a screw (16) or a pin, and that the free spring end of the latching spring (26), when the fitting parts (4, 5) are being plugged into each other, can be deflected transversely to the deflecting plane (28) of the latching tongue (20) by a counter bearing (27) of the second fitting part (5), wherein the free spring end remains deflected by the counter bearing (27) from the locking position until before the release position of the latching tongue (20) is reached, and, in the release position of the latching tongue (20), snaps back behind the counter bearing (27) and is thus fixed on the second fitting part (5).

2. The fitting as claimed in claim 1, **characterized in that**, on either side, the latching tongue (20) has a respective latching spring (26), the free spring end of which, when the fitting parts (4, 5) are being plugged into each other, can be deflected transversely to the deflecting plane (28) of the latching tongue (20) by a counter bearing (27) of the second fitting part (5), wherein the free spring end remains deflected by the counter bearing (27) from the locking position until before the release position of the latching tongue (20) is reached, and, in the release position of the latching tongue (20), snaps back behind the counter bearing (27) and is thus fixed to the second fitting part (5).

3. The fitting as claimed in claim 2, **characterized in that** the free ends of the two latching springs (26), when the fitting parts (4, 5) are being plugged into each other, can be deflected in the direction (29) toward one another by the counter bearings (27) of the second fitting part (5).

4. The fitting as claimed in one of the preceding claims, **characterized in that** at least one of the end sides (30, 31) of the free spring end and of the counter bearing (27), said end sides coming into contact with one another when the fitting parts (4, 5) are being plugged in, preferably both end sides (30, 31) that come into contact with one another, are designed to deflect the free spring end obliquely in relation to the plug-in direction of the fitting parts (4, 5).

5. The fitting according to one of the preceding claims, **characterized in that** the second fitting part (5) has a bearing base (12) with an access opening (24), through which can be introduced a tool (25) for deflecting the latching tongue (20) from the locking position into the release position.

6. The fitting as claimed in claim 5, **characterized in that** the access opening (24) is designed in the form of a round hole or in the form of a slot opening or cross-slot opening.

7. The fitting as claimed in claim 5 or 6, **characterized in that**, when the fitting parts (4, 5) are plugged into each other, the latching tongue (20) extends at least into the access opening (24) of the second fitting part (5).

8. An arrangement comprising a first furniture part (2), in particular a shelf, having an open-periphery bore (15) on the underside, a second furniture part (3), in particular a carcass wall, having a bore (17), and a fitting (1) as claimed in one of the preceding claims, wherein the first fitting part (4) is inserted into the bore (15) of the first furniture part (3) and the second fitting part (5) is inserted into the bore (17) of the second furniture part (3), and wherein, when they are plugged into each other, the two fitting parts (4, 5) are locked to one another by the latching tongue (20).

## Revendications

1. Ferrure (1) dévolue à la liaison libérable de deux parties (2, 3) d'un meuble, comprenant une première pièce d'armature (4) pouvant être fixée à une première partie (2) du meuble et une seconde pièce d'armature (5) pouvant être fixée à une seconde partie (3) dudit meuble, au moins une came rigide d'encliquetage (23), disposée sur ladite seconde pièce d'armature (5), étant emprisonnée par-derrière, à l'état d'imbrication mutuelle par emboîtement des pièces d'armature (4, 5), par un bec encliquetable (21) ménagé sur une languette déviable d'encliquetage (20) de la première pièce d'armature (4), sachant que ladite languette d'encliquetage (20) peut être mue, de sa position de verrouillage emprisonnant par-derrière la came d'encliquetage (23), à une position de libération n'emprisonnant plus par-derrière ladite came d'encliquetage (23), et peut être bloquée à demeure sur ladite seconde pièce d'armature (5) dans cette position de libération, ce blocage à demeure pouvant être neutralisé par dissociation des pièces d'armature (4, 5), et sachant que ladite languette d'encliquetage (20) est munie, à son tour, d'au moins un ressort d'encliquetage (26),
**caractérisée par le fait**
**que** la première pièce d'armature est réalisée sous la forme d'un tenon encastrable (4) notamment pourvu d'ailes déployables (9), et la seconde pièce d'armature est réalisée sous la forme d'une pièce de support (5) dotée d'une branche de fixation (13) qui comporte une cheville enfichable formée d'un seul tenant, ou un trou (14) dédié à une vis (16) ou à une cheville ; et par le fait que, lors de l'imbrication mutuelle par emboîtement des pièces d'armature (4, 5), l'extrémité libre du ressort d'encliquetage (26) peut être déviée transversalement par rapport au plan d'excursion (28) de la languette d'encliquetage (20), sous l'action d'une contre-butée (27) de la seconde pièce d'armature (5), sachant que ladite extrémité libre du ressort demeure déviée par ladite contre-butée (27), depuis la position de verrouillage jusqu'à l'instant précédant la position de libération de ladite languette d'encliquetage (20), puis s'enclenche par retour élastique derrière ladite contre-butée (27), dans ladite position de libération de ladite languette d'encliquetage (20), en étant ainsi bloquée à demeure sur ladite seconde pièce d'armature (5).

2. Ferrure selon la revendication 1, **caractérisée par le fait que** la languette d'encliquetage (20) est munie, de part et d'autre, d'un ressort respectif d'encliquetage (26) dont l'extrémité libre peut être déviée transversalement par rapport au plan d'excursion (28) de ladite languette d'encliquetage (20) sous l'action d'une contre-butée (27) de la seconde pièce d'armature (5), lors de l'imbrication mutuelle par emboîtement des pièces d'armature (4, 5), sachant que ladite extrémité libre du ressort demeure déviée par ladite contre-butée (27), depuis la position de verrouillage jusqu'à l'instant précédant la position de libération de ladite languette d'encliquetage (20), puis s'enclenche par retour élastique derrière ladite contre-butée (27), dans ladite position de libération de ladite languette d'encliquetage (20), en étant ainsi bloquée à demeure sur ladite seconde pièce d'armature (5).

3. Ferrure selon la revendication 2, **caractérisée par le fait que** les extrémités libres des deux ressorts d'encliquetage (26) peuvent être déviées par les contre-butées (27) de la seconde pièce d'armature (5), lors de l'imbrication mutuelle par emboîtement des pièces d'armature (4, 5), dans une direction (29) de rapprochement mutuel.

4. Ferrure selon l'une des revendications précédentes, **caractérisée par le fait qu'**au moins l'une des faces extrêmes (30, 31) de l'extrémité libre du ressort et de la contre-butée (27), butant l'une contre l'autre lors de l'imbrication mutuelle par emboîtement des pièces d'armature (4, 5), de préférence les deux faces extrêmes (30, 31) butant l'une contre l'autre, sont réalisées avec obliquité, par rapport à la direction d'emboîtement desdites pièces d'armature (4, 5), en vue de dévier l'extrémité libre du ressort.

5. Ferrure selon l'une des revendications précédentes, **caractérisée par le fait que** la seconde pièce d'armature (5) est pourvue d'un fond de support (12) percé d'un orifice d'accès (24) à travers lequel un outil (25) peut être inséré, en vue de dévier la languette encliquetable (20) vers la position de libération à partir de la position de verrouillage.

6. Ferrure selon la revendication 5, **caractérisée par le fait que** l'orifice d'accès (24) est réalisé en tant que trou circulaire, ou en tant qu'orifice en forme de fente ou de fente cruciforme.

7. Ferrure selon la revendication 5 ou 6, **caractérisée par le fait que** la languette encliquetable (20) s'insinue au moins jusque dans l'orifice d'accès (24) de la seconde pièce d'armature (5) à l'état d'imbrication mutuelle par emboîtement des pièces d'armature (4, 5).

8. Agencement comprenant une première partie (2) d'un meuble, en particulier un plateau dont la face inférieure est munie d'un perçage (15) à bord ouvert, une seconde partie (3) dudit meuble, en particulier une paroi de carcasse dotée d'un perçage (17), et une ferrure (1) conforme à l'une des revendications précédentes, sachant que la première pièce d'armature (4) et la seconde pièce d'armature (5) sont insérées, respectivement, dans ledit perçage (15) de la première partie (2) du meuble et dans ledit perçage (17) de la seconde partie (3) dudit meuble, et sachant que les deux pièces d'armature (4, 5) sont verrouillées l'une avec l'autre, à l'état d'imbrication mutuelle par emboîtement, sous l'action de la languette encliquetable (20).
